# EUROPEAN PATENT APPLICATION

(11) **EP 4 327 967 A1**
(43) Date of publication of application: **28.02.2024**
(21) Application number: 23171269.6
(22) Date of filing: 03.05.2023
(51) Int. Cl.: B23B 47/28, B23B 49/02

(54) **DRILL GUIDE AND METHOD**

(30) Priority: 26.08.2022 US 202217822465
(71) Applicant: The Boeing Company, Arlington, VA 22202 (US)
(72) Inventor: Bleyer, Christopher J., Arlington, 22202 (US); Valverde, Diego A., Arlington, 22202 (US); Henneman, Robert E., Arlington, 22202 (US); Bolden, Tonja L., Arlington, 22202 (US)
(74) Representative: Witte, Weller & Partner Patentanwälte mbB

(57) **Abstract**

A drill guide (20) for drilling a bore into a workpiece (22) having a curved surface. The drill guide comprises a drill block body (60) having a first side portion and a second side portion opposed to the first side portion. The drill block body defines a throughbore between the first side portion and the second side portion. The throughbore extends along a throughbore axis. A first leg protrudes from the first side portion of the drill block body. A second leg protrudes from the second side portion of the drill block body. A first wing is hingedly connected to the first leg.

## Description

### FIELD

This application relates to tools for positioning a drill bit relative to a surface and, more particularly, to drill guides for orienting a drill bit substantially perpendicular relative to a curved surface.

### BACKGROUND

Manufacturing operations in which two or more components are to be joined by mechanical fasteners, such as in a portion of an airframe assembly, typically require precise and repeatable holes or bores be drilled through the components through which fasteners may extend. Because of the relatively complex shapes of components in an airframe assembly it is often difficult to provide quality precise and repeatable holes or bores. This is especially challenging to manually drill a hole perpendicular to a contoured or curved surface of components of the airframe assembly.

Manual drilling of complex airframe assemblies and components is labor intensive and time consuming. Such drilling often is done by experienced technical workers and typically requires specialized tools and guide jigs. It is desirable to reduce the cost, quality issues, and time that is typically associated with such manual drilling.

An airframe assembly may have multiple layers of structural components of materials in varying size, hardness, quality, and thickness. Some components may be contoured and have irregular shapes and/or complex curvatures. For example, the first component in a multi-layered assembly may be a composite component to be joined to another composite components. Any suitable material, such as titanium or aluminum may also be used to form adjoining components in an airframe assembly.

Components of airframe assemblies are generally provided with pre-drilled target or pilot holes. A technical worker may be required to enlarge the target hole to accommodate mechanical fasteners, such as rivets, to in order to join components. The technical worker may be required to drill the hole or bore substantially perpendicular to the surface of the assembly at the location of the target or pilot hole. There are often very tight or small tolerances that the holes or bores must meet, such as size and angle relative to the surface to be drilled.

Conventional manual hand drilling systems employ a number of techniques and tools to drill a hole or bore perpendicular to a contoured or curved surface. These conventional manual hand drilling systems typically lack the necessary structure required to repeatedly and reliably guide a drill bit perpendicular to a surface over a multitude of complex topographies. For example, tools such as custom drill blocks may be used as a drill guide for manual drilling applications where the surface to be drilled includes multiple contours, curvatures and/or obstructions. Such custom drill blocks may be extremely complex and costly to design, manufacture and deploy. Multiple custom drill blocks may be required to accommodate numerous and varied specific surface contours and assembly locations. Another tool may be an eggcup tool which may be used as a hand-held drill guide to guide a drill bit substantially perpendicular to a work surface. Eggcup tools typically rely on the work surface to be substantially flat to achieve a drilled hole perpendicular to the work surface. These previously known conventional manual hand drilling tools typically do not have provisions to attach and secure the tools to the workpiece. This is an important feature when very tight or small tolerances for the holes or bores must be met.

These previously known approaches and tools fail to provide for a reliable, adaptable, repeatable, efficient and economical manual hand drill system. There is a need to provide a reliable and adaptable apparatus and efficient and repeatable method to economically and accurately drill a hole substantially perpendicular to a complex surface of an airframe assembly or component. Previously known approaches and tools which manually drill a hole perpendicular to the complex surface of a component that may be used in an airframe assembly can be improved upon.

### SUMMARY

Disclosed are drill guides for drilling a bore into a workpiece having a curved surface.

In one example, the disclosed drill guide includes a drill block body including a first side portion and a second side portion opposed from the first side portion, the drill block body defining a throughbore between the first side portion and the second side portion, the throughbore extending along a throughbore axis; a first leg protruding from the first side portion of the drill block body; a second leg protruding from the second side portion of the drill block body; and a first wing hingedly connected to the first leg.

In another example, the disclosed drill guide includes a drill block body including a first side portion and a second side portion opposed from the first side portion, the drill block body defining a throughbore between the first side portion and the second side portion, the throughbore extending along a throughbore axis; a first leg protruding from the first side portion of the drill block body; a second leg protruding from the second side portion of the drill block bod; each of the first leg and second leg having an arcuate end surface for engagement with the curved surface; a first wing hingedly connected to the first leg, the first wing for securing the drill block body against the curved surface; a second wing hingedly connected to the second leg, the second wing for securing the drill block body against the curved surface; and a bushing receivable in the throughbore in the drill block body, the bushing defines a second throughbore extending through the bushing, the second throughbore a generally cylindrical shape and having an axis coextensive with the axis of the drill block body.

Also disclosed are methods for forming a bore through a workpiece having a curved surface.

In one example, the disclosed method includes steps of (1) placing a drill block body with a first bore and a pair of spaced apart legs on a workpiece with a curved surface, each of the pair of spaced apart legs having an arcuate end surface and located on opposite sides of the first bore; (2) engaging the arcuate end surface of each of the pair of spaced apart legs of the drill block body against the curved surface; (3) pivoting at least one wing depending from the drill block body in a direction towards the curved surface; (4) engaging an arcuate surface of the at least one wing with the curved surface; and (5) securing the at least one wing with the curved surface to position the drill block body relative to the curved surface whereby an axis of the first bore of the drill block body extends substantially perpendicular to the curved surface.

According to an aspect of the present disclosure, a drill guide for drilling a bore into a workpiece having a curved surface, the drill guide comprises a drill block body comprising a first side portion and a second side portion opposed from the first side portion, the drill block body defining a throughbore between the first side portion and the second side portion, the throughbore extending along a throughbore axis; a first leg protruding from the first side portion of the drill block body; a second leg protruding from the second side portion of the drill block body; and a first wing hingedly connected to the first leg.

Advantageously, the drill guide further comprises a second wing hingedly connected to the second leg.

Preferably, the drill guide is one wherein the first wing and the second wing are each connected at a first end portion for pivotal movement relative to the drill block body, each of the first wing and second wing having an arcuate surface at a second end portion spaced from the first end portion, each of the arcuate surfaces for engagement with the curved surface to position and secure the drill block body relative to the curved surface.

Preferably, the drill guide is one wherein the first wing and the second wing each defines an opening therein, the opening being sized and shaped to receiving a mechanical fastener.

Preferably, the drill guide further comprises a bushing removably received in the throughbore in the drill block body, the bushing defines a second throughbore extending through the bushing, the second throughbore a generally cylindrical shape and having an axis coextensive with the axis of the drill block body.

Preferably, the drill guide further comprises a sleeve received in the throughbore, wherein the sleeve is located between the drill block body and the bushing.

Preferably, the drill guide further comprises a locking mechanism positioned to inhibit rotation of the bushing relative to the drill block body.

Preferably, the drill guide is one wherein the bushing is one of a plurality of bushings, wherein each bushing of the plurality of bushings defines a second throughbore having a unique inner diameter.

Preferably, the drill guide is one wherein the bushing has a cylindrical inner surface to closely fit a drill bit.

Preferably, the drill guide is one wherein, when the drill guide is positioned on the curved surface, a distance between a first location of contact of the first leg and a second location of contact of the second leg is less than a radius of the curved surface.

Preferably, the drill guide is one wherein the throughbore axis is generally perpendicular to the curved surface.

Preferably, the drill guide further comprises an arcuate end on each of the first leg and second leg for engagement with the curved surface.

Preferably, the drill guide further comprises a second wing hingedly connected to the second leg and an arcuate surface at a second end portion on each of the first wing and the second wing for engagement with the curved surface.

Preferably, the drill guide is one wherein the first leg and second leg are integrally formed as one piece with the drill block body.

Preferably, the drill guide is one wherein a portion of an aircraft is fabricated using the drill guide.

According to another aspect of the present disclosure, a drill guide for drilling a bore into a workpiece having a curved surface, the drill guide comprises a drill block body comprising a first side portion and a second side portion opposed from the first side portion, the drill block body defining a throughbore between the first side portion and the second side portion, the throughbore extending along a throughbore axis; a first leg protruding from the first side portion of the drill block body; a second leg protruding from the second side portion of the drill block bod; each of the first leg and second leg having an arcuate end surface for engagement with the curved surface; a first wing hingedly connected to the first leg, the first wing for securing the drill block body against the curved surface; a second wing hingedly connected to the second leg, the second wing for securing the drill block body against the curved surface; and a bushing receivable in the throughbore in the drill block body, the bushing defines a second throughbore extending through the bushing, the second throughbore a generally cylindrical shape and having an axis coextensive with the axis of the drill block body.

Advantageously, the drill guide is one wherein, when the drill guide is positioned on the curved surface, a distance between a first location of contact of the first leg and a second location of contact of the second leg is less than a radius of the curved surface.

Preferably, the drill guide is one wherein the throughbore axis is generally perpendicular to the curved surface.

Preferably, the drill guide is one wherein the first leg and the second leg are integrally formed as one piece with the drill block body.

Preferably, the drill guide is one wherein the first wing and the second wing are each connected at a respective first end portion for pivotal movement relative to the drill block body, each of the first wing and second wing having an arcuate surface at a respective second end portion spaced from the first end portion, each of the arcuate surfaces for engagement with the curved surface to position and secure the drill block body relative to the curved surface.

Preferably, the drill guide further comprises an arcuate surface at a second end portion on each of the first wing and the second wing for engagement with the curved surface.

Preferably, the drill guide is one wherein the bushing is one of a plurality of bushings, wherein each bushing of the plurality of bushings defines a second throughbore having a unique inner diameter.

Preferably, the drill guide is one wherein the bushing has a cylindrical shape to closely fit a drill bit.

Preferably, the drill guide is one wherein a portion of an aircraft is fabricated using the drill guide.

According to yet another aspect of the present disclosure, a method for forming a bore through a workpiece having a curved surface, the method comprising the steps of:
placing a drill block body with a first bore and a pair of spaced apart legs on a workpiece with a curved surface, each of the pair of spaced apart legs having an arcuate end surface and located on opposite sides of the first bore;
engaging the arcuate end surface of each of the pair of spaced apart legs of the drill block body against the curved surface;
pivoting at least one wing depending from the drill block body in a direction towards the curved surface;
engaging an arcuate surface of the at least one wing with the curved surface; and
securing the at least one wing with the curved surface to position the drill block body relative to the curved surface whereby an axis of the first bore of the drill block body extends substantially perpendicular to the curved surface.

Advantageously, the method further comprises inserting a bushing with a cylindrical second bore into the first bore of the drill block body.

Preferably, the method further comprises placing a drill bit of a size closely fitting the cylindrical second bore of the bushing into the cylindrical second bore of the bushing.

Preferably, the method further comprises rotating and advancing the drill bit to form a bore in the curved surface.

The method further comprises assembling a portion of an aircraft.

Other examples of the disclosed drill guides and methods for using a drill guide will become apparent from the following description, the accompanying drawings and the appended claims.

### BRIEF DESCRIPTION OF THE DRAWINGS

Fig. 1 is a perspective view of a drill guide according to one aspect positioning a drill bit substantially perpendicular relative to a curved surface of a component, such as an airframe assembly;

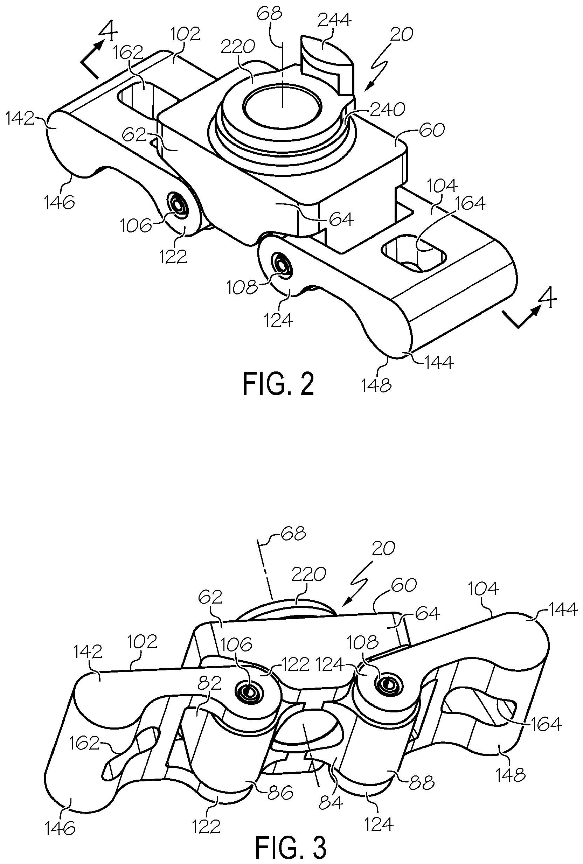

Fig. 2 is a perspective view of the drill guide from above;
Fig. 3 is a perspective view of the drill guide from below;
Fig. 4 is a cross-sectional view of the drill guide, taken approximately along a plane defined by line 4-4 in Fig. 2;
Fig. 5 is an exploded perspective view of the drill guide;
Fig.6 is a schematic illustration of the drill guide being positioned on a curved surface of the component;
Fig. 7 is a schematic illustration, similar to Fig. 6, of the drill guide positioning and securing a drill bit substantially perpendicular to the curved surface; and
Fig. 8 is a schematic illustration, similar to Fig. 7, of the drill bit being guided to form a hole or bore through the component and that is substantially perpendicular to the curved surface.

### DETAILED DESCRIPTION

A drill guide and method for using a drill guide, according to at least one aspect, overcome the shortfalls and disadvantages of previously known tools, techniques and methods. The drill guide provides a reliable, efficient and adaptable tool and method to attach and secure the drill guide to a workpiece, and repeatedly and accurately drill a hole or bore substantially perpendicular to a contoured or curved surface of an airframe assembly or component.

In one aspect, a drill guide is provided for drilling a hole or bore into a workpiece, such as an airframe assembly or component having a contoured or curved surface as may be present in an aircraft. At least a portion of the airframe assembly may be fabricated using the drill guide. The drill guide includes a drill block body having a first side portion and a spaced second side portion opposed to the first side portion. The drill block body has a throughbore located between the first side portion and the second side portion. The throughbore extends along a throughbore axis. A first leg protrudes from the first side portion of the drill block body. A second leg protrudes from the second side portion of the drill block body. An arcuate end on each of the legs is for engagement with the curved surface of the component. The legs may be integrally formed as one piece with the drill block body. A first wing is hingedly connected to the first leg. The first wing is for attaching and securing the drill block body in a desired location relative to the curved surface of the component.

The drill guide also may include a second wing hingedly connected to the second leg. The first wing and the second wing are each connected at a respective first end portion for pivotal movement relative to the drill block body. The second wing is also for attaching and securing the drill block body in a desired location relative to the curved surface of the component. Each of the first wing and second wing have an arcuate surface at a respective second end portion spaced from the first end portion. Each of the arcuate surfaces is for engagement with the curved surface to position and secure the drill block body relative to the curved surface. The first wing and the second wing each have an opening therein. Each opening is sized and shaped to receive a mechanical fastener that secures the drill block body to the component.

The drill guide also may include a bushing removably received in the throughbore in the drill block body. The bushing has a bushing throughbore extending through the bushing. The bushing throughbore is of a generally cylindrical shape and has an axis coextensive with the throughbore axis of the drill block body. The drill guide may include a sleeve received in the throughbore of the drill block body. The sleeve is located between the drill block body and the bushing.

The bushing has a cylindrical inner surface to closely fit a drill bit. The bushing is one of a plurality of bushings. Each bushing of the plurality of bushings defines a second throughbore having a unique inner diameter. A locking mechanism may be provided to inhibit rotation of the bushing relative to the drill block body.

When the drill guide is positioned on the curved surface, a distance between a first location of contact of the first leg and a second location of contact of the second leg is less than a radius of the curved surface. The throughbore axis is substantially perpendicular to the curved surface.

In another aspect, a method is used to form a hole or bore through a workpiece of an aircraft or component having a curved surface. The method is suitable for assembling a portion of an aircraft. The method includes placing a drill block body with a first throughbore and a pair of spaced apart legs on a workpiece with a curved surface. Each of the legs has an arcuate end surface. The legs are located on opposite sides of the first throughbore. The arcuate end surfaces of the spaced apart legs of the drill block body engage the curved surface. At least one wing depending from the drill block body is pivoted in a direction towards the curved surface. An arcuate surface of the wing engages the curved surface. The wing is attached and secured to the curved surface of the component to position the drill block body relative to the curved surface. An axis of the first bore of the drill block body extends substantially perpendicular to the curved surface. A drill bit is rotated and advanced through the drill block body to form a bore in the curved surface of the component.

The method may also include inserting a bushing with a cylindrical second bore into the first bore of the drill block body. A drill bit of a size closely fitting the cylindrical second bore of the bushing is placed into the cylindrical second bore of the bushing. Various removable and replaceable bushings with different inside diameters of the cylindrical second board accommodate drill bits of various sizes.

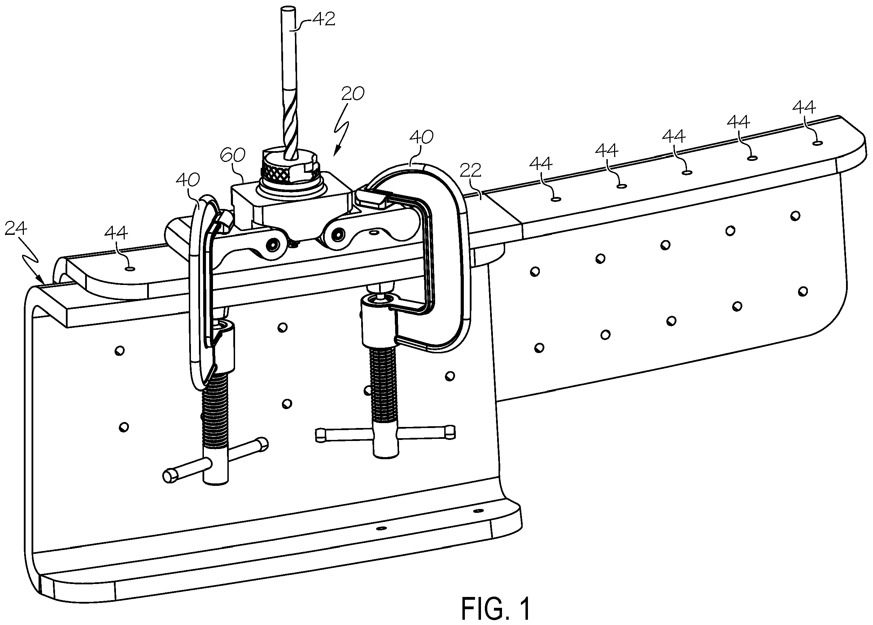

Referring to Fig. 1, a drill guide 20, according to at least one aspect, is described. The drill guide 20 overcomes the shortfalls and disadvantages of previously known tools and methods. The drill guide 20 provides a reliable, efficient and adaptable tool and method for attaching and securing the drill guide to repeatedly and accurately drill a hole or bore substantially perpendicular to a contoured or curved surface of a component 22. Such a component 22 with the curved surface may be encountered, for example, in the construction of at least a portion of an aircraft or portion of an airframe assembly 24. The drill guide 20 assures that the hole or bore is drilled through the component 22 within a very tight tolerance from perpendicular.

By way of example, the curved surface of the component 22 of the airframe assembly 24 illustrated in Fig. 1 is a slightly concave surface. The drill guide 20 may be employed with equal and satisfactory results on a component 22 that has a convex surface. The drill guide 20 may be employed on surfaces of varying sizes and varying complex curvatures. This eliminates or minimizes the need for multiple previously known custom drill blocks and associated cost and complexity of manufacturing and using the custom drill blocks.

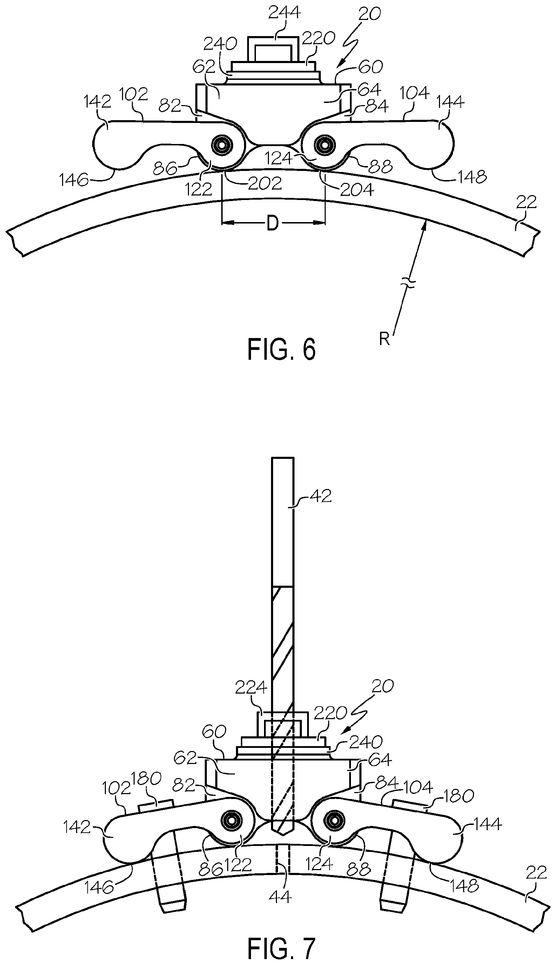

The drill guide 20 is illustrated as being temporarily attached to the component 22 of the airframe assembly 24 by clamps 40. The drill guide 20 also may be temporarily attached to the airframe assembly 24 by any various and suitable mechanical means, such as threaded fasteners 44 as illustrated in Figs. 7-8. Temporarily attaching the drill guide 20 to the curved surface of the component 22 allows a drill bit 42 to be adjusted and/or aligned with a target or pilot hole 44 (Fig. 7) in the component of the airframe assembly 24.

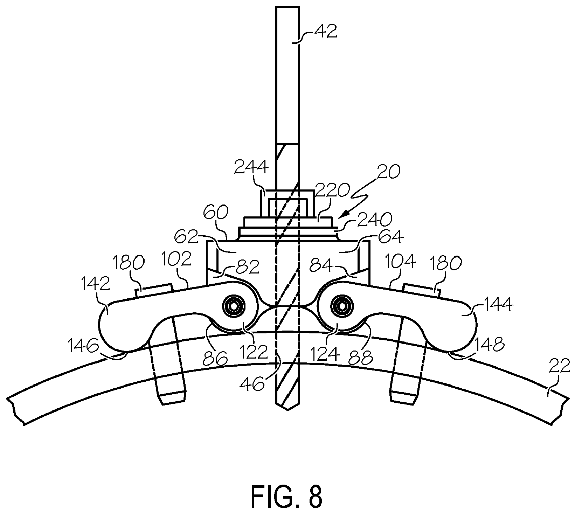

The drill guide 20 locates and positions the drill bit 42 for drilling a hole or bore 46 (Fig. 8) into a workpiece, such as the airframe assembly 24 or component 22 having a contoured or curved surface. The drill guide 20 assures that such hole or bore 46 is substantially perpendicular to the curved surface of the component 22 and repeatable within a very tight or small tolerance.

The drill guide 20 includes a drill block body 60. The drill block body 60 has a first side portion 62 and a second side portion 64. The second side portion 64 is located on an opposite side of the drill block body 60 from the first side portion 62. The drill block body 60 has a cylindrical throughbore 66. The cylindrical throughbore 66 is located between the first side portion 62 and the second side portion 64. The throughbore 66 has a central longitudinally extending throughbore axis 68. The drill block body 60 may be made of any suitable material, such as plastic or metal and by any suitable manufacturing process.

A first leg 82 protrudes from the first side portion 62 of the drill block body 60. A second leg 84 protrudes from the second side portion 64 of the drill block body 60. The first leg 82 has an end with an arcuate surface 86 facing in a direction away from the drill block body 60 for engaging a surface of the component 22. The second leg 84 has an end with an arcuate surface 88 facing in a direction away from the drill block body 60 for engaging a surface of the component 22. The first leg 82 and second leg 84 may be integrally formed as one piece with the drill block body 60. The throughbore 66 and the throughbore axis 68 are adapted to extend substantially perpendicular to the curved surface of the component 22.

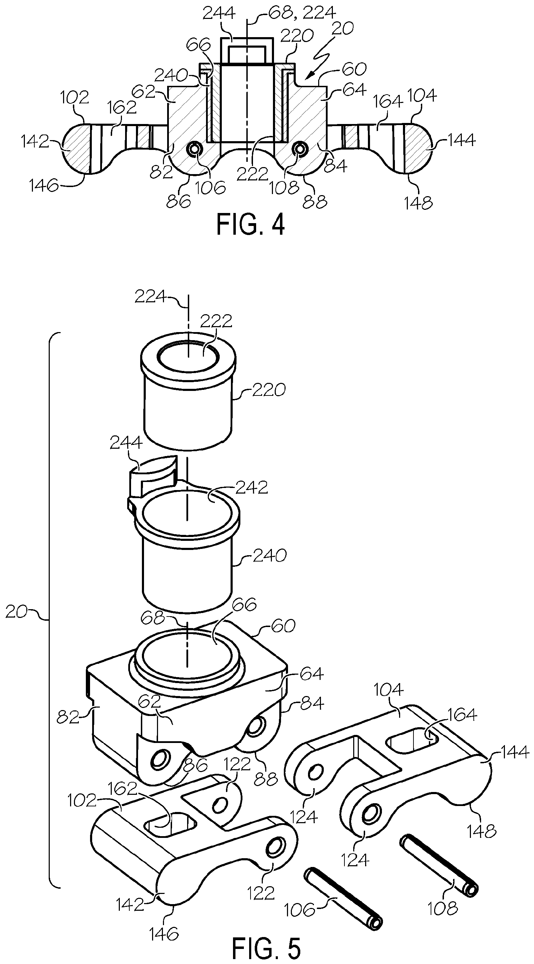

A first wing 102 is operably connected to the first leg 82 of the drill block body 60 by a hinge pin 106 (Figs. 4-5) for pivotal movement relative to the drill block body. The hinge pin 106 extends through openings in spaced apart first end portions 122 of the first wing 102 and through an opening in the first leg 82. The drill guide 20 also may include a second wing 104 operably connected to the second leg 84 of the drill block body 60 by a hinge pin 108 for pivotal movement relative to the drill block body. The hinge pin 108 extends through openings in spaced apart first end portions 124 of the second wing 104 and through an opening in the second leg 84 of the drill block body 60. The first wing 102 and second wing 104 may be made from any suitable material and by any suitable process.

The first wing 102 has a second end portion 142 spaced from the first end portion 122. The second wing 104 has a second end portion 144 spaced from the first end portion 124. The second end portion 142 of the first wing 102 has an arcuate surface 146 for engagement with the curved surface of the component 22 to position and retain the drill block body 60 relative to the curved surface of the component 22. The second end portion 144 of the second wing 104 has an arcuate surface 148 for engagement with the curved surface of the component 22 to position and retain the drill block body 60 relative to the curved surface of the component 22. The first arcuate surface 146 and the second arcuate surface 148 engage the curved surfaces of the component 22 span the target or pilot hole 44.

The radius of the arcuate surface 86 of the first leg 82 is larger than the radius of the arcuate surface146 of the first wing 102. The radius of the arcuate surface 88 of the second leg 84 is larger than the radius of the arcuate surface148 of the second wing 104. This assures that just the arcuate surface 86 of the first leg 82 and the arcuate surface 88 of second leg 84 engage the curved surface of the component 22.

The first wing 102 has an opening 162 extending through the first wing. The second wing 104 has an opening 164 extending through the second wing. Each of the openings 162, 164 is sized and shaped to receiving a mechanical fastener 180 (Figs. 7-8). Each of the openings 162, 164 is elongated to allow for some lateral movement of the drill block body 60 relative to the curved surface of the component 22. The drill bit 42 could be aligned and centered on the target or pilot hole 44 or drilled into the component 22. The target or pilot hole 44 is used to locate the drill bit 42 into a desired position along the curved surface of the component 22.

When the drill guide 20 is positioned on the curved surface of the component 22, a distance D (Fig. 6) between a first location of contact 202 of the arcuate surface 86 of the first leg 82 and a second location of contact 204 of the arcuate surface 88 of the second leg 84 is less than a radius R of the curved surface of the component 22. The arcuate surfaces 86, 88 are for engagement with the curved surface of the component 22. The arcuate surface 86 and the arcuate surface 88 engage the curved surfaces of the component 22 and span the target or pilot hole 44.

The first wing 102 and/or the second wing 104 may be mechanically attached to the curved surface of the component 22. In Fig. 1 the drill guide 20 is illustrated as temporarily attached by clamps 40 which can be easily removed. The first wing 102 has an opening 162 extending through the first wing. The second wing 104 has an opening 164 extending through the second wing. In Figs. 7 and 8 the drill guide 20 is illustrated as temporarily attached by mechanical fasteners 180 extending through the opening 162 in the first wing 102 and the opening 164 in the second wing 104. The mechanical fasteners 180 can be easily removed. Any suitable devices or mechanisms may be used to attach the drill guide 20 to the curved surface of the component 22. Thus, the first wing 102 and/or second wing 104 have features to attach and secure the drill guide 20 to the workpiece. This is an important feature when very tight or small tolerances for the holes or bores 46 must be met.

The drill guide 20 may also include a bushing 220 removably receivable within the throughbore 66 in the drill block body 60. The bushing 220 defines a cylindrically shaped bushing throughbore 222 extending through the bushing. The bushing throughbore 222 has a longitudinally extending axis 224 coextensive with the throughbore axis 68 of the drill block body 60.

The inner surface of the bushing throughbore 222 of the bushing 220 has a unique inner diameter that closely fits the outside diameter of the drill bit 42. The bushing 220 is chosen from a plurality of bushings depending on the diameter of the hole or bore 46 desired in the component 22. A locking mechanism 244 is provided to inhibit rotation of the bushing 220 relative to the sleeve 240 and drill block body 60.

The drill guide 20 may also include a sleeve 240 receivable in the throughbore 66 of the drill block body 60. The sleeve 240 is located between the drill block body 60 and the bushing 220 in order to support the bushing in the drill block body. The outer diameter of the sleeve 240 closely fits the inner diameter of the throughbore 66 in the drill block body 60. The sleeve 240 may be press fit into the drill block body 60. The diameter of the inner surface 242 of the sleeve 240 closely fits the outer diameter of the bushing 220. The bushing 220 and sleeve 240 may be made from any suitable material and by any suitable manufacturing process. The bushing 220 and sleeve 240 may be made from different materials.

In order to use the drill guide 20 on a curved surface of a component 22, the drill block body 60 is located near the target or pilot hole 44 as viewed in FIG 7. The throughbore 66 and throughbore axis 68 of the drill block body 60 are positioned along the longitudinal central axis of the target or pilot hole 44. The target or pilot hole 44 is intended to serve as a locating guide for the tip of the drill bit 42. The first and second legs 82, 84 of the drill block body 60 are brought into contact with the component 22 and span the target or pilot hole 44.

The first wing 102 and second wing 104 may then be pivoted and mechanically attached to the component 22. An arcuate surface 146 on the first wing 102 and an arcuate surface 148 on the second wing 104 engage the curved surface of the component 22. Any suitable attachment may be used such as the clamps 40 illustrated in Fig. 1 or the mechanical fasteners 180 illustrated in Figs. 7-8. The first wing 102 and second wing 104 permit some lateral displacement of the drill block body 60 by the openings 162, 164 in the wings to ensure that the throughbore axis 68 of the drill block body 60 and axis 224 of the bushing 220 are substantially coaxial with the centerline of the target or pilot hole 44. The drill bit 42 is then aligned with the pilot hole 44. The drill bit 42 is advanced through the bushing 220 and into the target or pilot hole 44. The drill bit 42 is further advanced until it completely extends through the component 22 and forms the hole or bore 46. The resultant hole or bore 46, as illustrated in Fig. 8, is substantially perpendicular to the curved surface of the component 22. While the drill bit 42 is illustrated and described as forming a bore 46 through a single component 22, the drill bit may form coaxial bores through adjacent or adjoining components of the airframe assembly 24, as illustrated in Fig. 1.

Thus, the drill guide 20 is a tool for manual hand drilling a hole or bore substantially perpendicular to a contoured or curved surface of the component 22, such as may be part of an airframe assembly 24 or a portion of an aircraft. The drill guide 20 structure provides a system to reliably guide a drill bit 42 substantially perpendicular to a surface over a multitude of complex topographies that was lacking in previously known tools. Such complex topographies may be encountered in an airframe assembly 24, a component 22 of an airframe or a portion of an aircraft having a contoured or curved surface.

In another aspect, a method for employing the drill guide 20 to assemble at least a portion of an aircraft with a curved surface of a component 22, such as may be found in an airframe assembly 24 of an aircraft. The method includes forming a hole or bore 46 through the component 22 or the portion of the aircraft having a curved surface. The hole or bore 46 is formed substantially perpendicular to the curved surface of the component 22. The method assures that the hole or bore 46 is drilled through the component 22 within a very tight tolerance from perpendicular relative to the curved surface.

The method includes placing a drill block body 60 with a throughbore 66 and a first leg 82 spaced from a second leg 84 on a workpiece component 22 with a curved surface, such as may be found in an aircraft, portion of an aircraft, or an airframe assembly 24. Each of the first and second legs 82, 84 have respective ends with arcuate surfaces 86, 88 located on opposite sides of the throughbore 66. The ends of the arcuate surfaces 86, 88 of the first and second legs 82, 84 of the drill block body 60 are brought into contact with the curved surface of the component 22. The throughbore 66 of the drill block body 60 is preliminarily aligned over a target or pilot hole 44 in the component 22.

At least one wing, and preferably both the first wing 102 and the second wing 104, depending from the drill block body 60 are pivoted in a direction towards the curved surface of the component 22. Arcuate surface 146 of the first wing 102 and arcuate surface 148 of the second wing 104 are brought into engagement with the curved surface of the component 22. At least one of the first wing 102 and second wing 104 is secured to the component 22 to position and secure the drill block body 60 relative to the curved surface. It may be preferred that both of the first wing 102 and second wing 104 are secured to the component 22 to position and secure the drill block body 60 relative to the curved surface. Such securement may be made by any suitable means, such as mechanical fasteners 180 as illustrated in Figs 7 and 8 or clamps 40 as illustrated in Fig. 1. The throughbore axis 68 of the throughbore 66 of the drill block body 60 extends substantially perpendicular to the curved surface of the component 22. Thus, the first wing 102 and/or second wing 104 enable attachment and securement of the drill guide 20 to the component 22, thereby ensuring the drill bit 42 does not move relative to the component 22 during drilling. This is an important feature when very tight or small tolerances for the holes or bores 46 must be met.

The drill bit 42 is aligned with the target or pilot hole 44. In the event that the drill bit 42 is not aligned with the target or pilot hole 44, the drill block body 60 can be moved so alignment occurs. This can be done by loosening the mechanical fasteners 180 or clamps 40 on the first wing 102 and second wing 104 and positioning the drill bit 42 in a desired alignment with the target or pilot hole 44 and then re-tightening the mechanical fasteners. The drill bit 42 then is rotated and advanced within the bushing 220 to form the bore 46 through the component 22 or multiple coaxial bores in multiple components.

The method may also include inserting the bushing 220 with the cylindrical bushing throughbore 222 into the throughbore 66 in the drill block body 60. A drill bit 42 of a size closely fitting the cylindrical bushing throughbore 222 of the bushing 220 is placed into the cylindrical bore. The method may also include inserting the bushing 220 into a sleeve 240 that is placed within the throughbore 66 of drill block body 60. The bushing 220 may be retained by locking mechanism 244 to prevent rotation relative to the sleeve 240 and drill block body 60. The drill bit 42 then is rotated and advanced to form the bore 46 in the curved surface of the component 22.

Further, the current disclosure comprises embodiments according to the following clauses:
Clause 1. A drill guide (20) for drilling a bore (46) into a workpiece (22) having a curved surface, the drill guide (20) comprising:
   a drill block body (60) comprising a first side portion (62) and a second side portion (64) opposed from the first side portion (62), the drill block body (60) defining a throughbore (66) between the first side portion (62) and the second side portion (64), the throughbore (66) extending along a throughbore axis (68);
   a first leg (82) protruding from the first side portion (62) of the drill block body (60);
   a second leg (84) protruding from the second side portion (64) of the drill block body (60); and
   a first wing (102) hingedly connected to the first leg (82).
Clause 2. The drill guide (20) of Clause 1, further comprising a second wing (104) hingedly connected to the second leg (84).
Clause 3. The drill guide (20) of Clause 2, wherein the first wing (102) and the second wing (104) are each connected at a first end portion (122, 124) for pivotal movement relative to the drill block body (60), each of the first wing (102) and second wing (104) having an arcuate surface (146, 148) at a second end portion (142, 144) spaced from the first end portion (122, 124), each of the arcuate surfaces (146, 148) for engagement with the curved surface to position and secure the drill block body (60) relative to the curved surface.
Clause 4. The drill guide (20) according to Clause 2 or 3, wherein the first wing (102) and the second wing (104) each defines an opening (162, 164) therein, the opening (162, 164) being sized and shaped to receiving a mechanical fastener.
Clause 5. The drill guide (20) according to any one of Clauses 1 to 4, further comprising a bushing (220) removably received in the throughbore (66) in the drill block body (60), the bushing (220) defines a second throughbore (222) extending through the bushing (220), the second (222) a generally cylindrical shape and having an axis coextensive with the axis of the drill block body (60).
Clause 6. The drill guide (20) of Clause 5, further comprising a sleeve (240) received in the throughbore, wherein the sleeve (240) is located between the drill block body (60) and the bushing (220).
Clause 7. The drill guide (20) according to Clause 5 or 6, further comprising a locking mechanism (244) positioned to inhibit rotation of the bushing (220) relative to the drill block body (60).
Clause 8. The drill guide (20) according to any one of Clauses 5 to 7, wherein the bushing (220) is one of a plurality of bushings, wherein each bushing (220) of the plurality of bushings defines a second throughbore (222) having a unique inner diameter.
Clause 9. The drill guide (20) according to any one of Clauses 5 to 8, wherein the bushing (220) has a cylindrical inner surface (242) to closely fit a drill bit.
Clause 10. The drill guide (20) according to any one of Clauses 1 to 9, wherein, when the drill guide (20) is positioned on the curved surface, a distance between a first location of contact (202) of the first leg (82) and a second location of contact (204) of the second leg (84) is less than a radius of the curved surface.
Clause 11. The drill guide (20) according to any one of Clauses 1 to 10, wherein the throughbore axis (68) is generally perpendicular to the curved surface.
Clause 12. The drill guide (20) according to any one of Clauses 1 to 11, further comprising an arcuate end on each of the first leg (82) and second leg (84) for engagement with the curved surface.
Clause 13. The drill guide (20) according to any one of Clauses 1 to 12, further comprising a second wing (104) hingedly connected to the second leg (84) and an arcuate surface at a second end portion on each of the first wing (102) and the second wing (104) for engagement with the curved surface.
Clause 14. The drill guide (20) according to any one of Clauses 1 to 13, wherein the first leg (82) and second leg (84) are integrally formed as one piece with the drill block body (60).
Clause 15. The drill guide (20) according to any one of Clauses 1 to 14, wherein a portion of an aircraft is fabricated using the drill guide.
Clause 16. A drill guide (20) for drilling a bore (46) into a workpiece having a curved surface, the drill guide (20) comprising:
   a drill block body (60) comprising a first side portion (62) and a second side portion (64) opposed from the first side portion (62), the drill block body (60) defining a throughbore (66) between the first side portion (62) and the second side portion (64), the throughbore (66) extending along a throughbore axis (68);
   a first leg (82) protruding from the first side portion (62) of the drill block body (60);
   a second leg (84) protruding from the second side portion (64) of the drill block bod;
   each of the first leg (82) and second leg (84) having an arcuate end surface for engagement with the curved surface;
   a first wing (102) hingedly connected to the first leg (82), the first wing (102) for securing the drill block body (60) against the curved surface;
   a second wing (104) hingedly connected to the second leg (84), the second wing (104) for securing the drill block body (60) against the curved surface; and
   a bushing (220) receivable in the throughbore (66) in the drill block body (60), the bushing (220) defines a second throughbore (222) extending through the bushing (220), the second throughbore (222) a generally cylindrical shape and having an axis coextensive with the axis of the drill block body (60).
Clause 17. The drill guide (20) of Clause 16, wherein, when the drill guide is positioned on the curved surface, a distance between a first location of contact of the first leg (82) and a second location of contact of the second leg (84) is less than a radius of the curved surface.
Clause 18. The drill guide (20) according to Clause 16 or 17, wherein the throughbore axis (68) is generally perpendicular to the curved surface.
Clause 19. The drill guide (20) according to any one of Clauses 16 to 18, wherein the first leg (82) and the second leg (84) are integrally formed as one piece with the drill block body (60).
Clause 20. The drill guide (20) according to any one of Clauses 16 to 19, wherein the first wing (102) and the second wing (104) are each connected at a respective first end portion (122, 124) for pivotal movement relative to the drill block body (60), each of the first wing (102) and second wing (104) having an arcuate surface (146) at a respective second end portion (142, 144) spaced from the first end portion (122, 124), each of the arcuate surfaces (146, 148) for engagement with the curved surface to position and secure the drill block body (60) relative to the curved surface.
Clause 21. The drill guide (20) according to any one of Clauses 16 to 20, further comprising an arcuate surface (146, 148) at a second end portion (142, 144) on each of the first wing (102) and the second wing (104) for engagement with the curved surface.
Clause 22. The drill guide (20) according to any one of Clauses 16 to 21, wherein the bushing (220) is one of a plurality of bushings, wherein each bushing (220) of the plurality of bushings defines a second throughbore (222) having a unique inner diameter.
Clause 23. The drill guide (20) according to any one of Clauses 16 to 22, wherein the bushing (220) has a cylindrical shape to closely fit a drill bit.
Clause 24. The drill guide (20) according to any one of Clauses 16 to 23, wherein a portion of an aircraft is fabricated using the drill guide (20).
Clause 25. A method for forming a bore (46) through a workpiece having a curved surface, the method comprising the steps of:
   placing a drill block body (60) with a first bore and a pair of spaced apart legs on a workpiece with a curved surface, each of the pair of spaced apart legs having an arcuate end surface and located on opposite sides of the first bore;
   engaging the arcuate end surface of each of the pair of spaced apart legs of the drill block body (60) against the curved surface;
   pivoting at least one wing depending from the drill block body (60) in a direction towards the curved surface;
   engaging an arcuate surface of the at least one wing with the curved surface; and
   securing the at least one wing with the curved surface to position the drill block body (60) relative to the curved surface whereby an axis of the first bore of the drill block body (60) extends substantially perpendicular to the curved surface.
Clause 26. The method of Clause 25, further comprising inserting a bushing (220) with a cylindrical second bore (222) into the first bore (66) of the drill block body (60).
Clause 27. The method of Clause 26, further comprising placing a drill bit of a size closely fitting the cylindrical second bore (222) of the bushing (220) into the cylindrical second bore (222) of the bushing (220).
Clause 28. The method of Clause 27, further comprising rotating and advancing the drill bit to form a bore in the curved surface.
Clause 29. The method according to any one of Clauses 25 to 28, further comprising assembling a portion of an aircraft.

Although various aspects of the drill guide and method of using the drill guide have been shown and described, modifications may occur to those skilled in the art upon reading the specification. The present application includes such modifications and is limited only by the scope of the clauses.

## Claims

1. A drill guide (20) for drilling a bore (46) into a workpiece (22) having a curved surface, the drill guide (20) comprising:
a drill block body (60) comprising a first side portion (62) and a second side portion (64) opposed from the first side portion (62), the drill block body (60) defining a throughbore (66) between the first side portion (62) and the second side portion (64), the throughbore (66) extending along a throughbore axis (68);
a first leg (82) protruding from the first side portion (62) of the drill block body (60);
a second leg (84) protruding from the second side portion (64) of the drill block body (60); and
a first wing (102) hingedly connected to the first leg (82).

2. The drill guide (20) of Claim 1, further comprising a second wing (104) hingedly connected to the second leg (84).

3. The drill guide (20) of Claim 2, wherein the first wing (102) and the second wing (104) are each connected at a first end portion (122, 124) for pivotal movement relative to the drill block body (60), each of the first wing (102) and second wing (104) having an arcuate surface (146, 148) at a second end portion (142, 144) spaced from the first end portion (122, 124), each of the arcuate surfaces (146, 148) for engagement with the curved surface to position and secure the drill block body (60) relative to the curved surface.

4. The drill guide (20) according to Claim 2 or 3, wherein the first wing (102) and the second wing (104) each defines an opening (162, 164) therein, the opening (162, 164) being sized and shaped to receiving a mechanical fastener.

5. The drill guide (20) according to any one of Claims 1 to 4, further comprising a bushing (220) removably received in the throughbore (66) in the drill block body (60), the bushing (220) defines a second throughbore (222) extending through the bushing (220), the second (222) a generally cylindrical shape and having an axis coextensive with the axis of the drill block body (60).

6. The drill guide (20) of Claim 5, further comprising a sleeve (240) received in the throughbore, wherein the sleeve (240) is located between the drill block body (60) and the bushing (220).

7. The drill guide (20) according to Claim 5 or 6, further comprising a locking mechanism (244) positioned to inhibit rotation of the bushing (220) relative to the drill block body (60).

8. The drill guide (20) according to any one of Claims 1 to 7, wherein, when the drill guide (20) is positioned on the curved surface, a distance between a first location of contact (202) of the first leg (82) and a second location of contact (204) of the second leg (84) is less than a radius of the curved surface.

9. The drill guide (20) according to any one of Claims 1 to 8, further comprising an arcuate end on each of the first leg (82) and second leg (84) for engagement with the curved surface.

10. The drill guide (20) according to any one of Claims 1 to 9, further comprising a second wing (104) hingedly connected to the second leg (84) and an arcuate surface at a second end portion on each of the first wing (102) and the second wing (104) for engagement with the curved surface.

11. The drill guide (20) according to any one of Claims 1 to 10, wherein the first leg (82) and second leg (84) are integrally formed as one piece with the drill block body (60).

12. A method for forming a bore (46) through a workpiece having a curved surface, the method comprising the steps of:
placing a drill block body (60) with a first bore and a pair of spaced apart legs on a workpiece with a curved surface, each of the pair of spaced apart legs having an arcuate end surface and located on opposite sides of the first bore;
engaging the arcuate end surface of each of the pair of spaced apart legs of the drill block body (60) against the curved surface;
pivoting at least one wing depending from the drill block body (60) in a direction towards the curved surface;
engaging an arcuate surface of the at least one wing with the curved surface; and
securing the at least one wing with the curved surface to position the drill block body (60) relative to the curved surface whereby an axis of the first bore of the drill block body (60) extends substantially perpendicular to the curved surface.

13. The method of Claim 12, further comprising inserting a bushing (220) with a cylindrical second bore (222) into the first bore (66) of the drill block body (60).

14. The method of Claim 13, further comprising placing a drill bit of a size closely fitting the cylindrical second bore (222) of the bushing (220) into the cylindrical second bore (222) of the bushing (220).

15. The method of Claim 14, further comprising rotating and advancing the drill bit to form a bore in the curved surface.
